(19)

Europäisches
Patentamt
European
Patent Office
Office européen
des brevets

(11) **EP 2 571 152 A1**

(12) **EUROPEAN PATENT APPLICATION**

(43) Date of publication:
**20.03.2013 Bulletin 2013/12**

(51) Int Cl.:
**H02M 3/158** (2006.01)

(21) Application number: **11007581.9**

(22) Date of filing: **17.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Braun GmbH**
**61476 Kronberg (DE)**

(72) Inventors:
• **Wachter, Christian**
  **64291 Darmstadt (DE)**
• **Langsdorf, Jan, Christian**
  **61440 Oberursel (DE)**
• **Laschinski, Gerd**
  **61440 Oberursel (DE)**

(54) **DC converter with adjustable output voltage**

(57) The present invention relates to a dc converter whose output voltage is adjustable. The dc converter has
- an output at which an output voltage (VOUT) may be tapped, and which has an output terminal and a reference potential terminal,
- a control circuit which has a control input,
- a voltage divider (R1, R2), which is connected in parallel to the output, and which has a center tap connected to the control input, and
- a voltage source (DC) which is connected in series to the voltage divider (R1, R2), and whose voltage (VSET) is adjustable.

Figure 2

**Description**

FIELD OF THE INVENTION

The present invention relates to a dc converter with adjustable output voltage and an electrical appliance having such a dc converter.

BACKGROUND OF THE INVENTION

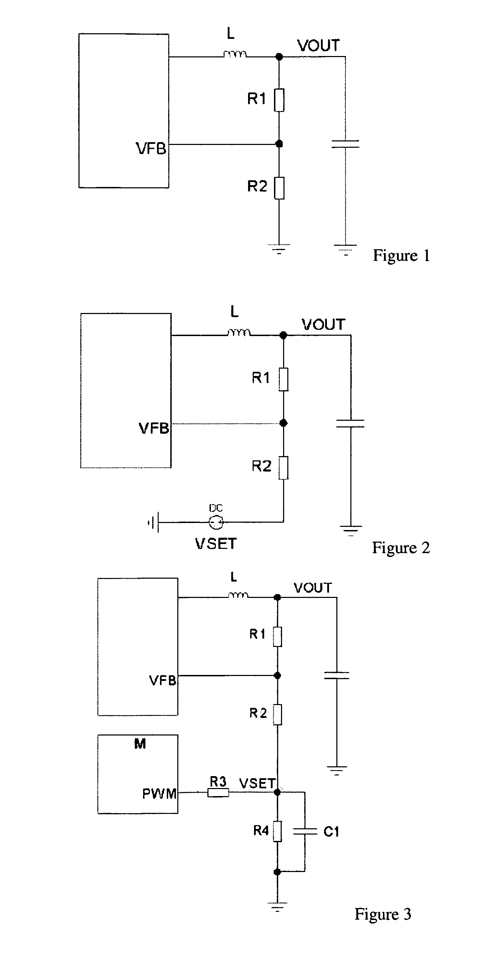

DC converters with constant output voltage are known, which output voltage can be tapped between an output terminal and a reference potential terminal (ground) and is ordinarily smoothed by means of a smoothing capacitor. Such a dc converter, namely a buck converter having a choke L and a control circuit, is shown schematically in Figure 1. The output voltage VOUT of the converter is divided by a voltage divider that has two resistors R1 und R2. The center tap of the voltage divider is connected to a control input of the control circuit. The converter is controlled by the control circuit in such a way that the voltage VFB at the control input corresponds to an internal reference voltage Vref, as a result of which the output voltage VOUT remains constant. The level of the output voltage VOUT depends on the size of the resistors R1, R2: $VOUT = Vref \cdot (1 + R1 / R2)$. In the event that the output voltage VOUT of the converter is adjustable to several different values, at least one of the resistors must be variable, or a corresponding number of switchable resistors must be provided.

SUMMARY OF THE INVENTION

The object of the present invention is to specify a dc converter whose output voltage is easily adjustable.
The object is achieved by a dc converter having the following features (see claim 1):

- an output at which an output voltage (VOUT) may be tapped, and which has an output terminal and a reference potential terminal,
- a control circuit which has a control input, and
- a voltage divider (R1, R2), which is connected in parallel to the output, and which has a center tap connected to the control input,
- a voltage source (DC), which is connected in series to the voltage divider (R1, R2), the voltage (VSET) of the voltage source (DC) being adjustable.

Advantageous developments of the dc converter are specified in the dependent claims. The dc converter is in particular suitable for an electrical appliance, for example an electric shaving apparatus having a Peltier element which should be operated with a regulated, easily adjustable DC voltage.

BRIEF DESCRIPTION OF THE DRAWINGS

The present invention is explained in the following using exemplary embodiments that are shown in the drawings:

Figure 1     schematically shows a known buck converter;

Figure 2     shows a dc converter with infinitely adjustable output voltage;

Figure 3     shows a variant of the dc converter according to Figure 2.

DETAILED DESCRIPTION OF THE INVENTION

Figure 2 shows a dc converter whose output voltage is adjustable. The converter has a buck converter known per se, as is shown in Figure 1 and described above. However, it additionally includes a direct voltage source DC which is connected in series with the voltage divider R1, R2, that is, between the control input of the control circuit and the reference potential. The direct voltage source supplies an adjustable voltage VSET. The voltage VSET is preferably infinitely adjustable. The output voltage VOUT of the converter is dependent on the voltage VSET of the voltage source:

$$VOUT = Vref \cdot (1 + R1 / R2) - VSET \cdot R1 / R2; \text{ wherein } VSET < Vref.$$

Therefore the output voltage VOUT may be adjusted by appropriate selection of VSET.

The dc converter shown in Figure 3 largely corresponds to the direct current voltage converter shown in Figure 2; however, the direct voltage source includes an RC circuit and a generator M which feeds a pulse-width modulated voltage PWM to the RC circuit. The RC circuit has a capacitor C1 which is connected in series with the voltage divider R1, R2. The junction of the capacitor C1 and the voltage divider is linked by way of a resistor R3 to the output of the generator M. The direct voltage VSET appears at the capacitor C1 of the RC circuit; the direct voltage VSET is dependent on the pulse width of the pulse-width modulated voltage PWM and thus may be adjusted by varying the pulse width. The pulse width is preferably adjusted digitally, although analog adjustment is also possible, thereby making the pulse width practically infinitely adjustable. Connected in parallel to the capacitor C1 is a resistor R4 via which the level of the pulse-width modulated voltage PWM is lowered by a factor of R3/R4, resulting in a finer adjustability of the direct voltage VSET given the same resolution of the pulse-width modulation.

The generator M for the pulse-width modulated voltage is preferably implemented in a microcontroller. It is particularly advantageous if the control circuit for the dc converter is also implemented in the microcontroller.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

**Claims**

1.  A dc converter with

    - an output at which an output voltage (VOUT) is tappable, and which output has an output terminal and a reference potential terminal,
    - a control circuit which has a control input and
    - a voltage divider (R1, R2), which is connected in parallel to the output, and which has a center tap connected to the control input,
    **characterized in that**
    the dc converter also has a voltage source (DC) which is connected in series to the voltage divider (R1, R2) and whose voltage (VSET) is adjustable.

2.  The dc converter according to claim 1, **characterized in that**
    the voltage source (DC) is connected between the control input of the control circuit and the reference potential terminal.

3.  The dc converter according to claim 1 or 2, **characterized in that** the voltage source (DC) is composed of an RC circuit (R3, C1) and a generator (M), which generator (M) generates a pulse-width modulated voltage (PWM) whose pulse width is adjustable.

4.  The dc converter according to claim 3, **characterized in that** the capacitor (C1) of the RC circuit (R3, C1) is connected in series between the voltage divider (R1, R2) and the reference potential terminal.

5.  The dc converter according to claim 4, **characterized in that**
    the resistor (R3) of the RC circuit (R3, C1) is connected between the output of the generator (M) and to the junction between the voltage divider (R1, R2) and the capacitor (C1).

6.  The dc converter according to any one of claims 4 or 5, **characterized in that**
    an additional resistor (R4) is connected in parallel to the capacitor (C1) of the RC circuit (R3, C1).

7.  The dc converter according to any one of claims 3 to 6, **characterized in that**
    the generator (M) is implemented in a microcontroller.

8.  An electrical appliance, for example an electric shaving apparatus, having a dc converter according to any one of the preceding claims.

9.  The electrical appliance according to claim 8, **characterized in that** the appliance also has a Peltier element that is operated with the output voltage (VOUT) of the dc converter.

Figure 1

Figure 2

Figure 3

Europäisches
Patentamt

European
Patent Office

Office européen
des brevets

# EUROPEAN SEARCH REPORT

Application Number

EP 11 00 7581

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/080673 A1 (SELIVERSTOV ANATOL [US]) 12 April 2007 (2007-04-12) * figures 2,3 * * paragraphs [0006], [0007], [0016], [0017], [0021] - [0023] * ----- | 1-9 | INV. H02M3/158 |
| X | US 2001/052762 A1 (TSUJI HIROYUKI [JP]) 20 December 2001 (2001-12-20) * figures 2,3,4,6 * * paragraphs [0017], [0019], [0045], [0048] - [0050] * ----- | 1,3-9 | |
| X | WO 2011/107976 A1 (MITCHELL PATRICK MICHAEL [IE]) 9 September 2011 (2011-09-09) * figure 1 * * page 1, lines 2-29 * * page 11, line 30 - page 14, line 5 * ----- | 1-9 | |

TECHNICAL FIELDS
SEARCHED      (IPC)

H02M

The present search report has been drawn up for all claims

| Place of search | Date of completion of the search | Examiner |
|---|---|---|
| The Hague | 3 July 2012 | Kail, Maximilian |

EPO FORM 1503 03.82 (P04C01)

**ANNEX TO THE EUROPEAN SEARCH REPORT
ON EUROPEAN PATENT APPLICATION NO.**

EP 11 00 7581

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2012

| Patent document cited in search report | | Publication date | Patent family member(s) | | Publication date |
|---|---|---|---|---|---|
| US 2007080673 | A1 | 12-04-2007 | CN | 101283324 A | 08-10-2008 |
| | | | EP | 1934673 A1 | 25-06-2008 |
| | | | US | 2007080673 A1 | 12-04-2007 |
| | | | WO | 2007044378 A1 | 19-04-2007 |
| US 2001052762 | A1 | 20-12-2001 | JP | 2001359273 A | 26-12-2001 |
| | | | US | 2001052762 A1 | 20-12-2001 |
| WO 2011107976 | A1 | 09-09-2011 | IE | 20100113 A2 | 30-03-2011 |
| | | | WO | 2011107976 A1 | 09-09-2011 |

EPO FORM P0459

For more details about this annex : see Official Journal of the European Patent Office, No. 12/82